# EUROPEAN PATENT SPECIFICATION

(11) **EP 3 435 666 B1**
(45) Date of publication and mention of the grant of the patent: **15.07.2020**
(21) Application number: 16895323.0
(22) Date of filing: 12.09.2016
(51) Int. Cl.: G08B 13/196, H04N 7/18, G07G 1/12, G08B 25/00, G08B 25/04

(54) **MONITORING DEVICE AND MONITORING SYSTEM**
ÜBERWACHUNGSVORRICHTUNG UND ÜBERWACHUNGSSYSTEM
DISPOSITIF DE SURVEILLANCE ET SYSTÈME DE SURVEILLANCE

(30) Priority: 25.03.2016 JP 2016062033
(43) Date of publication of application: 30.01.2019
(73) Proprietor: Panasonic Intellectual Property Management Co., Ltd., Osaka-shi, Osaka 540-6207 (JP)
(72) Inventor: ITOH, Tomoaki, Osaka-shi, Osaka 540-6207, (JP); SHIN, Hidehiko, Osaka-shi, Osaka 540-6207, (JP)
(74) Representative: Eisenführ Speiser
(86) International application number: PCT/JP2016/004149
(87) International publication number: WO 2017/163283

(56) References cited:
- EP-A2- 2 230 629
- JP-A- 2002 041 770
- JP-A- 2002 041 770
- JP-A- 2005 286 619
- JP-A- 2006 115 435
- JP-A- 2013 196 043
- JP-A- 2015 069 279
- US-A1- 2015 085 128
- US-A1- 2016 055 651

## Description

### Technical Field

The present disclosure relates to a monitoring device and a monitoring system for identifying a person captured by a camera to track the identified person.

### Background Art

Patent Document 1 discloses a monitoring system including a plurality of monitoring cameras. In this monitoring system, each of the monitoring cameras extracts feature information of an object appearing in a video, and transmits the feature information to the other monitoring cameras. This enables the plurality of monitoring cameras to track and monitor the object having the same feature information in cooperation with one another.
Patent Document 2 discloses a System that can track an object as it moves across the field of view of the security device, integrate transaction data with the object information, and can identify events that trigger an alert.

### Prior Art Documents

### Patent Documents

Patent Document 1: JP 2003-324720 A
Patent Document 2: US 2015/085128 A1

### Summary of Invention

### Problem to be Solved by the Invention

The present disclosure provides a monitoring device and a monitoring system which are effective for accurately tracking an object.

### Means for Solving the Problem

A monitoring device according to the present disclosure is a monitoring device which identifies a person from videos made by a plurality of cameras installed in a predetermined region where a plurality of products are arranged. The monitoring device includes: a receiving unit configured to receive the videos from the plurality of cameras and purchase history information indicating a product purchased by the person from a POS register installed in the predetermined region; a storage unit configured to store feature information indicating a feature of the person and shooting region information indicating shooting regions of the plurality of cameras; and a controller configured to identify the person from the videos based on the feature information, wherein, based on the purchase history information and the shooting region information, the controller specifies the camera which captured the shooting region through which the person passed.

### Effects of the Invention

The monitoring device and the monitoring system in the present disclosure are effective for accurately tracking an object.

### Brief Description of Drawings

FIG. 1 is a block diagram showing a configuration of a monitoring system of a first embodiment.
FIG. 2A is a diagram showing an example of a purchase history information table in the first embodiment, FIG. 2B is a diagram showing an example of a display information table in the first embodiment, and FIG. 2C is a diagram showing an example of a shooting region information table in the first embodiment.
FIG. 3 is a diagram showing a disposition example of a plurality of monitoring cameras in the first embodiment.
FIG. 4 is a flowchart for explaining operations of identifying a person in the first embodiment.
FIG. 5A is a diagram for explaining feature extraction of a person, and FIG. 5B is a diagram showing an example of a feature information table in the first embodiment.
FIG. 6 is a diagram showing an example of a capturing time information table in the first embodiment.
FIG. 7 is a flowchart for explaining operations of correcting the capturing time information table in the first embodiment.
FIG. 8 is a diagram for explaining correction of capturing time information in the first embodiment.

### Description of Embodiments

Embodiments will be described below in detail with reference to the drawings. In some cases, however, unnecessary detailed description will be omitted. For example, detailed description of well-known matters or repetitive description of substantially identical structures will be omitted in some cases. The reason is that unnecessary redundancy of the following description is to be avoided and a person skilled in the art is to be enabled to make easy understanding. The inventor(s) provide(s) the accompanying drawings and the following description for allowing a person skilled in the art to fully understand the present disclosure and it is not intended that the subject described in claims should be thereby restricted to the accompanying drawings and the following description.

### (First embodiment)

A first embodiment will be described with reference to the drawings. The present embodiment provides a monitoring system effective for tracking an object even if a situation occurs in which a feature of the object (the object is a person in the present embodiment) cannot be extracted from some of a plurality of monitoring cameras.

### [1. Configuration]

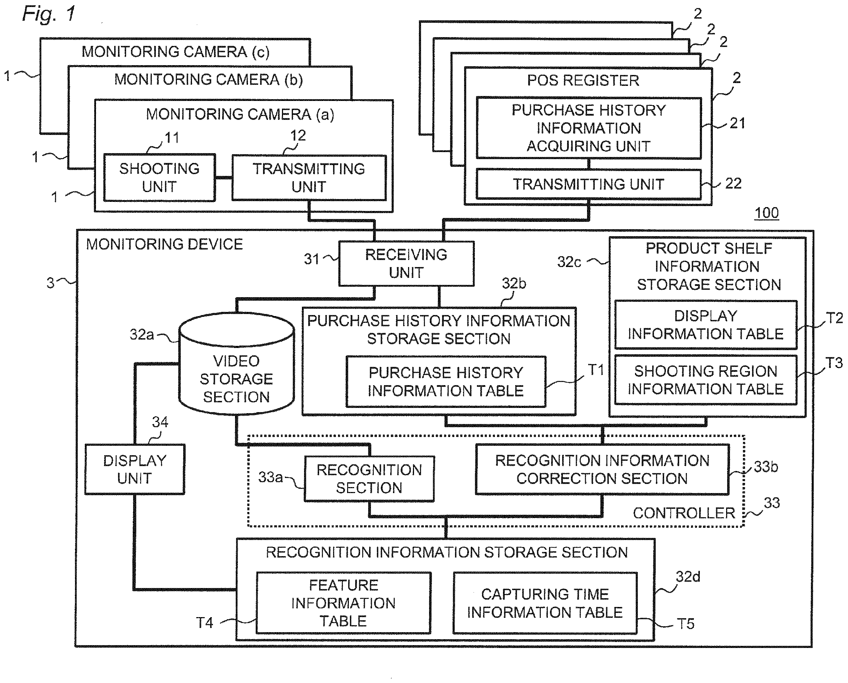

FIG. 1 shows a configuration of a monitoring system of the first embodiment. The monitoring system 100 of the present embodiment includes: a plurality of monitoring cameras 1 (monitoring cameras "a", "b", "c"); a plurality of POS (Point of Sales) registers (registers) 2; and a monitoring device 3. The monitoring device 3 identifies a person appearing in videos made by the plurality of monitoring cameras 1 and tracks the identified person using purchase history information acquired by the plurality of POS registers 2.

Each of the monitoring cameras 1 includes: a shooting unit 11 configured to make a video; and a transmitting unit 12 configured to transmit the video which is made by the shooting unit 11. The shooting unit 11 can include a CCD image sensor, a CMOS image sensor, an NMOS image sensor, or the like. The transmitting unit 12 includes an interface circuit for performing communication with an external instrument in conformity with a predetermined communication standard (for example, LAN, WiFi) .

Each of the POS registers 2 includes: a purchase history information acquiring unit 21 configured to acquire purchase history information indicating a product purchased by a person in a shop; and a transmitting unit 22 configured to transmit the acquired purchase history information. The purchase history information acquiring unit 21 includes a bar code reader using a scanner, a CCD, a laser or the like. The transmitting unit 22 includes an interface circuit for performing communication with an external instrument in conformity with a predetermined communication standard (for example, LAN, WiFi).

The monitoring device 3 includes: a receiving unit 31 configured to receive the videos from the respective monitoring cameras 1 and the purchase history information from the respective POS registers 2; a video storage section 32a configured to store the received videos; a purchase history information storage section 32b configured to store a purchase history information table T1 including the received purchase history information; and a controller 33 configured to identify a person appearing in the videos stored in the video storage section 32a to track the identified person. The receiving unit 31 includes an interface circuit for performing communication with an external instrument in conformity with a predetermined communication standard (for example, LAN, WiFi) .

The controller 33 can be a semiconductor element or the like. A function of the controller 33 may be configured with only hardware, or may be realized by combining hardware and software. The controller 33 can be, for example, a microcomputer, a CPU, an MPU, a DSP, an FPGA, or an ASIC.

The controller 33 includes a recognition section 33a which identifies the person appearing in the videos stored in the video storage section 32a. The recognition section 33a extracts features of the person appearing in the videos stored in the video storage section 32a, and then generates feature information indicating the extracted features. The recognition section 33a generates capturing time information indicating a time period during which the person having the extracted features appears in the videos made by the monitoring cameras 1. The feature information and the capturing time information are recognition information obtained by recognizing the person.

The monitoring device 3 further includes: a product shelf information storage section 32c which stores a display information table T2 and a shooting region information table T3; and a recognition information storage section 32d which stores a feature information table T4 and a capturing time information table T5. The display information table T2 and the shooting region information table T3 are stored in advance in the product shelf information storage section 32c. The display information table T2 includes display information indicating respective product shelves on which respective products are displayed in the shop. The shooting region information table T3 includes shooting region information indicating regions capable of being captured by the monitoring cameras 1. The display information includes information on the product shelf on which the product is displayed, and the shooting region information includes information on the product shelf or shelves captured by the monitoring camera 1. The feature information table T4 includes feature information of the person, which is generated by the recognition section 33a. The capturing time information table T5 includes capturing time information generated by the recognition section 33a.

The controller 33 further includes a recognition information correction section 33b which corrects the capturing time information table T5 based on the purchase history information table T1, the display information table T2, the shooting region information table T3 and the feature information table T4. The recognition information correction section 33b specifies the monitoring camera 1 which should capture the identified person based on the purchase history information table T1, the display information table T2 and the shooting region information table T3. The recognition information correction section 33b determines whether or not there is capturing time information of the specified monitoring camera 1 (that is, whether or not the identified person was captured by the specified monitoring camera 1) based on the capturing time information table T5. In the case of having determined that there is no capturing time information of the specified monitoring camera 1 (that is, the identified person was not captured by the specified monitoring camera 1), the recognition information correction section 33b calculates (estimates) a time period during which the person who was not captured should appear in the video made by the specified monitoring camera 1 based on the capturing time information table T5, determines that another person appearing in the video made by the monitoring camera 1 in the calculated (estimated) time is the same person who was not captured, and corrects the capturing time information table T5.

The video storage section 32a, the purchase history information storage section 32b, the product shelf information storage section 32c and the recognition information storage section 32d are the same or different storage units, each of which can include, for example, a DRAM, a ferroelectric memory, a flash memory, a magnetic disk or the like.

The monitoring device 3 further includes a display unit 34. The display unit 34 is capable of displaying the videos stored in the video storage section 32a, the feature information table T4 and the capturing time information table T5. The display unit 34 can be a liquid crystal display or the like.

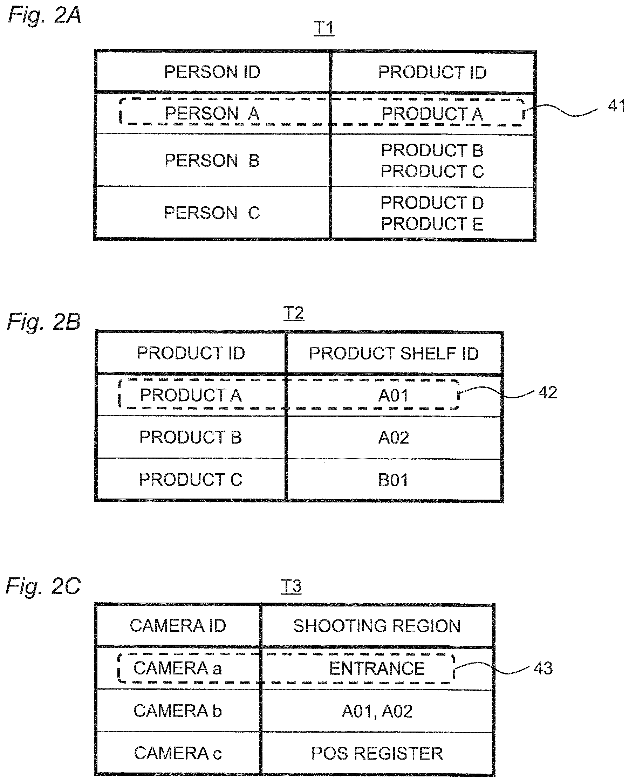

FIG. 2A shows an example of the purchase history information table T1 in the first embodiment. The purchase history information table T1 includes purchase history information 41 acquired by the purchase history information acquiring unit 21 of the POS register 2. The purchase history information 41 includes identification information (ID) of a person and identification information (ID) of a product purchased by the person. FIG. 2B shows an example of the display information table T2 in the first embodiment. The display information table T2 includes display information 42. The display information 42 includes identification information (ID) of a product and identification information (ID) of a product shelf on which the product is displayed. The display information table T2 is stored in advance in the product shelf information storage section 32c, for example, when a display place of the product has been determined. FIG. 2C shows an example of the shooting region information table T3 in the first embodiment. The shooting region information table T3 includes shooting region information 43. The shooting region information 43 includes identification information (ID) of a monitoring camera 1 and a shooting region of the monitoring camera 1. The shooting region information table T3 is stored in advance in the product shelf information storage section 32c, for example, when the monitoring camera 1 has been installed.

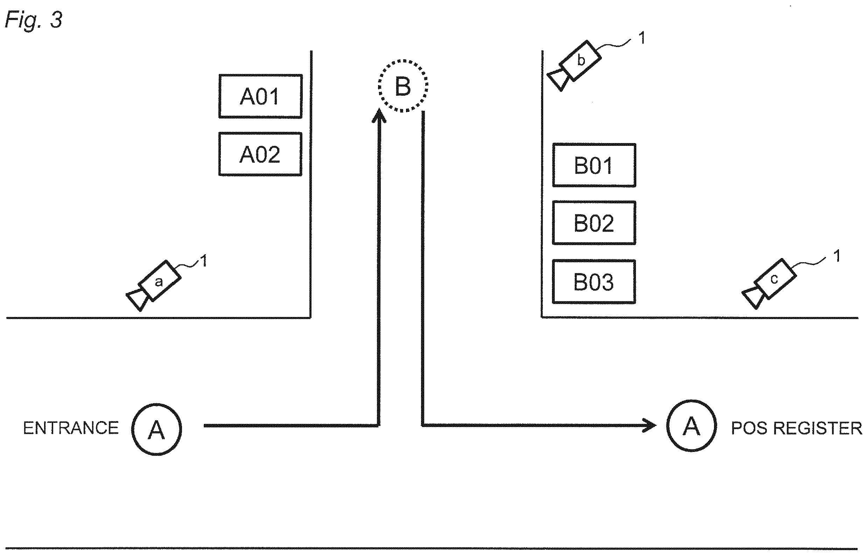

FIG. 3 shows a disposition example of the monitoring cameras 1. In the present embodiment, the monitoring cameras 1 (monitoring cameras "a", "b", "c") are installed in a shop. In the example of FIG. 3, the monitoring camera "a" is disposed at a position to capture an entrance, the monitoring camera "b" is disposed at a position to capture product shelves "A01" and "A02", and the monitoring camera "c" is disposed at a position to capture the POS register 2. Note that the number of monitoring cameras 1 and such installation locations thereof are merely examples and are appropriately changeable. However, at least one of the monitoring cameras 1 is installed in an area capable of capturing the POS register 2. Each of the monitoring cameras 1 transmits the video made by the shooting unit 11, from the transmitting unit 12 to the monitoring device 3. The transmitted videos are stored in the video storage section 32a of the monitoring device 3.

### [2. Identifying person (Generation of capturing time information)]

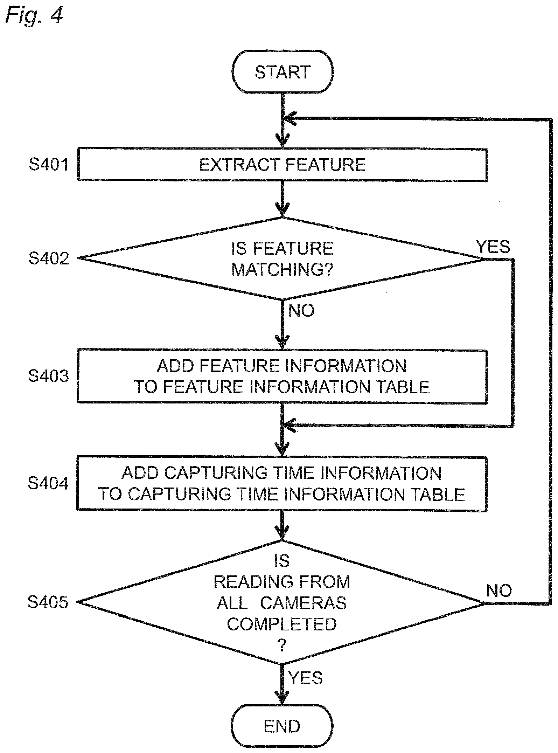

FIG. 4 shows processing for identifying a person by the recognition section 33a. The recognition section 33a performs the processing for identifying a person, which is shown in FIG. 4, at predetermined timing. For example, the predetermined timing may be when the user gives an instruction to the monitoring device 3, or may be every predetermined time (for example, 24 hours).

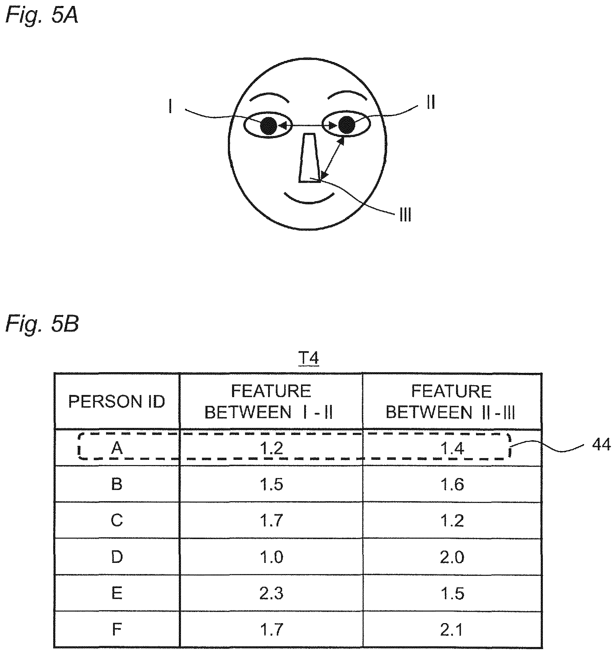

The recognition section 33a reads out the videos stored in the video storage section 32a, and extracts the features of the person appearing in the videos (S401). For example, the recognition section 33a analyzes the videos in order from the video of the monitoring camera "a" installed on an entrance side, or in order from the video of the monitoring camera "c" installed on the POS register 2 side. For example, the recognition section 33a extracts a shape, color, size, or position of a part of a face as a feature of the person. FIG. 5A shows an example of feature extraction of a person, and FIG. 5B shows an example of the feature information table T4. For example, the recognition section 33a extracts, as the feature of the person, a distance (distance of "I-II") between both eyes and a distance (distance of "II-III") between one eye and a nose, as shown in FIG. 5A, and adds feature information 44, which includes the extracted feature (distances), to the feature information table T4 as shown in FIG. 5B.

At this time, the recognition section 33a determines whether or not feature information 44 indicating the feature matching the extracted feature is already present in the feature information table T4 (S402). If the feature information 44 indicating the matching feature is not present, then the recognition section 33a determines that a new person is extracted from the video, and generates identification information (ID) for identifying the person. Then, the recognition section 33a adds such feature information 44, which includes the generated identification information and the feature (the distance of "I-II" and the distance of "II-III") of the person, to the feature information table T4 (S403).

The video made by the monitoring camera 1 includes information on the capturing time of the video, and the purchase history information 41 acquired by the POS register 2 includes information on a recording time of the purchase history information 41. Therefore, by referring to the capturing time of the monitoring camera "c" installed for capturing the POS register 2 and the recording time of the purchase history information 41 acquired by the POS register 2, the person appearing in the video of the monitoring camera "c" and the person who has purchased the product indicated in the purchase history information 41 can be linked with each other. When analyzing the video of the monitoring camera "c" installed for capturing the POS register 2, the recognition section 33a causes the identification information (ID) of the person in the purchase history information table T1 and the identification information (ID) of the person in the feature information table T4 to coincide with each other.

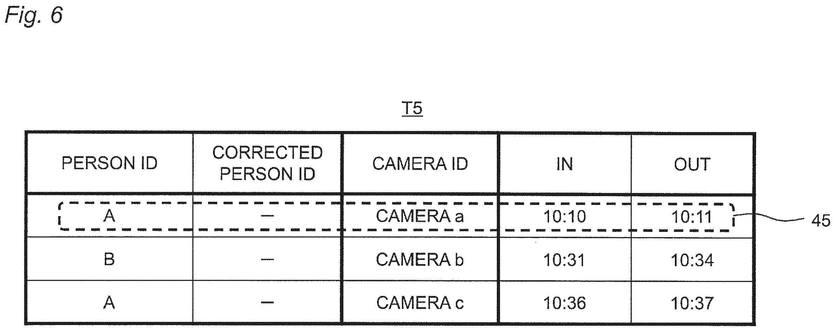

Based on the feature information 44, the recognition section 33a generates capturing time information indicating who was captured, which monitoring camera 1 performed the capturing, and when the capturing was performed, and adds the capturing time information to the capturing time information table T5 (S404) . FIG. 6 shows an example of the capturing time information table T5. The capturing time information 45 includes: identification information (ID) of a person, identification information of the monitoring camera 1 which captured the person, a time (IN time) when the person began to appear in the video made by the monitoring camera 1, and a time (OUT time) when the person finished appearing. The identification information (ID) of the person in the capturing time information table T5 is the same as the identification information (ID) of the person in the feature information table T4.

The recognition section 33a determines whether or not reading of the videos from all the monitoring cameras 1 is completed (S405). If the reading is not completed, the recognition section 33a repeats the processing of Steps S401 to S404 for the videos of the remaining monitoring cameras 1.

In this manner, the person can be identified by extracting the features of the person from the videos made by the monitoring cameras 1. Further, the monitoring camera 1 which captured the identified person and a time when the monitoring camera 1 captured the identified person can be recognized by referring to the capturing time information table T5. Therefore, it is possible to track the person using the videos of the plurality of monitoring cameras 1.

### [3. Specifying person (Correction of capturing time information)]

Depending on an angle and lighting conditions at the time of capturing, the same person may appear differently in the videos. Therefore, features of the same person which are extracted from the videos made by the plurality of monitoring cameras 1 may not coincide with one another. For example, videos to be made differ largely between the monitoring camera 1 installed at a high position in a bright place and the monitoring camera 1 installed at a low position in a dark place, and accordingly, features of the person which are extracted from the videos made by these cameras may differ therebetween. In this case, different features may be extracted from the same person, and therefore, the same person is recognized as another person. Therefore, even when the same person passes in front of the plurality of monitoring cameras 1 (for example, the monitoring cameras "a", "b" and "c") in order, the features of the same person cannot be extracted from the videos made by some of the monitoring cameras 1 (for example, the monitoring camera "b"), and the tracking of the person may be interrupted.

In view of this, in the present embodiment, in order that the person can be tracked even if there occurs a situation where the features of the person cannot be extracted from a part of the videos made by the plurality of monitoring cameras 1, the same person is selected from among the persons who are determined to be different persons since the features thereof do not coincide with one another, using the purchase history information table T1, the display information table T2 and the shooting region information table T3. Accordingly, the capturing time information table T5 is corrected.

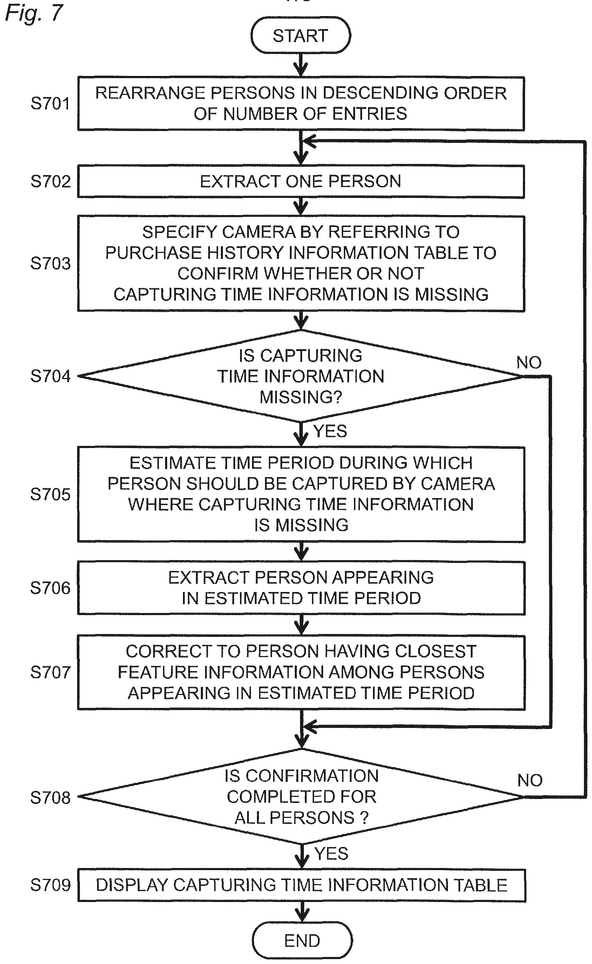

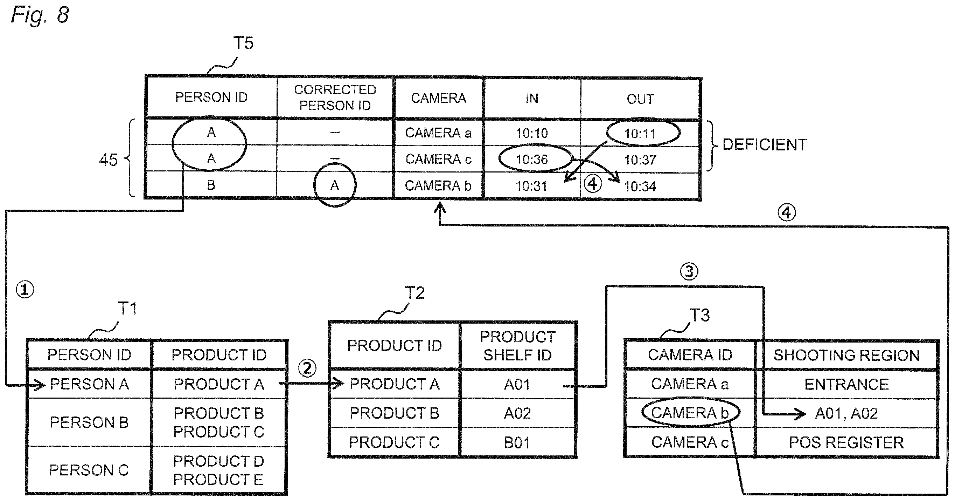

FIG. 7 shows a process for correcting the capturing time information table T5 by the recognition information correction section 33b. The recognition information correction section 33b reads out the capturing time information table T5, and rearranges the persons in a descending order of the number of entries of the persons (S701). FIG. 8 shows the capturing time information table T5 after the rearrangement. The recognition information correction section 33b extracts one person in the descending order of the number of entries (S702), then refers to the purchase history information table T1, and confirms whether or not the capturing time information 45 is missing with respect to the extracted person (S703). Whether or not the capturing time information 45 is missing is confirmed by referring to the purchase history information table T1 and specifying the monitoring camera 1 which should capture the person. Specifically, in the example of FIG. 8, the recognition information correction section 33b first refers to the purchase history information table T1, and detects that the person "A" has purchased the product "A". Next, the recognition information correction section 33b refers to the display information table T2, and detects that the product "A" is displayed on the product shelf "A01". Then, the recognition information correction section 33b refers to the shooting region information table T3, and detects that the product shelf "A01" is captured by the monitoring camera "b". That is, the recognition information correction section 33b specifies the monitoring camera "b" as the monitoring camera 1 which should capture the person "A". Then, the recognition information correction section 33b refers to the capturing time information table T5, and confirms whether or not the capturing time information 45 of the monitoring camera "b" is present for the person "A".

If the capturing time information 45 is not missing (No at S704), it is determined whether or not the confirmation is completed for all persons recorded in the capturing time information table T5 as to whether or not the capturing time information 45 is missing (S708). If the confirmation is not completed (No at S708), the processing returns to Step S702 to newly extract a next person from the capturing time information table T5 and confirm whether or not the capturing time information 45 is missing.

If the capturing time information 45 is missing (Yes at S704), the recognition information correction section 33b refers to the capturing time information table T5, and estimates (calculates) a time period during which the person should be captured by the monitoring camera 1 where the capturing time information 45 on the person is missing (S705). For example, as shown in FIG. 8, regarding the person "A", the capturing time information 45 of the monitoring camera "b" is missing. The recognition information correction section 33b estimates that the person "A" appears in the video made by another monitoring camera (here, the monitoring camera "b") in a time period between an OUT time (10:11) of the person "A" from the monitoring camera "a" installed for capturing the entrance and an IN time (10:36) thereof to the camera "c" installed for capturing the POS register 2. In other words, the recognition information correction section 33b estimates (calculates) the time period between 10:11 and 10:36 as a time period during which the person "A" may be captured by the monitoring camera "b".

The recognition information correction section 33b extracts a person appearing in the estimated time period from the capturing time information table T5 (S706). In the example of FIG. 8, the IN time of the person "B" to the monitoring camera "b" is 10:31 and the OUT time of the person "B" therefrom is 10:34, and accordingly, the recognition information correction section 33b extracts the person "B" appearing in the video made by the monitoring camera "b" during the estimated time period (10:11 to 10:36). At this time, the recognition information correction section 33b may extract a person from among those with a small number of entries, for example, from among those on which the capturing time information 45 is missing. If the number of extracted persons is one, then the extracted person (person "B") is determined to be the same person (person "A"), and the capturing time information table T5 is corrected. In the example of FIG. 8, the identification information of the person "A" is recorded as "corrected identification information (ID) of the person" in the capturing time information 45 on the person "B".

When there are a plurality of persons appearing in the estimated time period, the recognition information correction section 33b determines based on the feature information table T4 that a person having the closest feature information 44 is the same person, and corrects the capturing time information table T5 (S707).

It is determined whether or not the confirmation is completed for all persons recorded in the capturing time information table T5 as to whether or not the capturing time information 45 is missing (S708). If the confirmation is not completed (No at S708), the processing returns to Step S702 to newly extract a next person from the capturing time information table T5 and confirm whether or not the capturing time information 45 is missing. When the confirmation as to whether or not the capturing time information 45 is missing is completed for all the persons recorded in the capturing time information table T5, the capturing time information table T5 is displayed on the display unit 34 (S709). The user can confirm that the person captured by the plurality of monitoring cameras 1 is tracked by referring to the corrected capturing time information table T5 displayed on the display unit 34.

As described above, the recognition information correction section 33b compensates for the missing of the capturing time information 45 using the purchase history information table T1, the display information table T2, the shooting region information table T3 and the feature information table T4. For example, as shown in FIG. 8, the recognition information correction section 33b corrects the person "B" as the person "A", thereby compensating for the capturing time information 45 on the person "A" of the monitoring camera "b". As a result, it is possible for the controller 33 to track the person "A" with high accuracy.

In the example of FIG. 2C, the shooting region information 43 of the shooting region information table T3 includes the identification information (ID) of the product shelf, but may also include the identification information (ID) of the product. In this case, by referring to the identification information of the product in the purchase history information table T1 and the identification information of the product in the shooting region information table T3, the monitoring camera 1 which captured the region including the purchased product can be directly specified based on the purchased product without using the display information table T2.

### [4. Effects]

As described above, the monitoring device 3 of the present embodiment identifies a person from videos captured by the plurality of monitoring cameras 1 installed in the predetermined region (shop) where the plurality of products are arranged. The monitoring device 3 includes: the receiving unit 31 which receives the videos from the plurality of monitoring cameras 1 and the purchase history information 41 indicating the product purchased by the person from the POS register 2 installed in the predetermined region (shop); the recognition information storage section 32d which stores the feature information 44 indicating the feature of the person; the product shelf information storage section 32c which stores the shooting region information 43 indicating the shooting region of each monitoring camera 1; and the controller 33 which identifies the person from the videos based on the feature information 44. Based on the purchase history information 41 and the shooting region information 43, the controller 33 specifies the monitoring camera 1 which captured the shooting region through which the person passed. Not only the person is identified using the feature information 44, but also the monitoring camera 1 which captured the person is specified using the purchase history information 41 and the shooting region information 43, and accordingly, the tracking of the person can be realized with high accuracy.

Based on the shooting region information 43, the controller 33 specifies the monitoring camera 1 which captured an image of the location where the product included in the purchase history information 41 was arranged as the monitoring camera 1 which captured the shooting region through which the person passed. As a result, the monitoring camera 1 which captured the person can be specified based on the purchase history information 41 and the shooting region information 43, and accordingly, the tracking of the person can be realized with high accuracy.

The plurality of monitoring cameras 1 include: a first camera (monitoring camera "c") disposed at a predetermined position; and a second camera (monitoring camera "b") specified, by the controller 33, as the monitoring camera 1 which captured the shooting region through which the person passed. A person who has been unidentifiable from the video made by the second camera (monitoring camera "b") is specified in the video made by the second camera (monitoring camera "b") based on the time when the person was captured by the first camera (monitoring camera "c"). Specifically, the controller 33 generates the capturing time information 45 indicating the time when the person identified based on the feature information 44 appears in the video made by the monitoring camera 1. Moreover, based on the purchase history information 41 and the shooting region information 43, the controller 33 specifies the monitoring camera 1 (monitoring camera "b") which should capture the person. If the person does not appear in the video made by the specified monitoring camera 1, the controller 33 estimates the time when the person who does not appear in the video made by the specified monitoring camera 1 (monitoring camera "b") should be captured by the specified monitoring camera 1 (monitoring camera "b") based on the capturing time information 45 of the monitoring camera 1 (monitoring camera "c") disposed at a predetermined position. Then, with reference to the capturing time information 45, the controller 33 specifies that another person appearing in the video made by the specified monitoring camera 1 at the estimated time is the person who could not be captured, and rewrites the capturing time information 45. As a result, even when pieces of the feature information 44 do not coincide with one another and the capturing time information 45 is missing, the capturing time information 45 which is missing can be compensated for by referring to the purchase history information 41 and the shooting region information 43. Therefore, even when the feature information 44 of the person acquired from the video of a part of the monitoring cameras 1 is not acquired from the video of the other monitoring camera 1, and the person in the video of the part of the monitoring cameras 1 is recognized as the other person in the video of the other monitoring camera 1, it can be newly recognized that the persons in both of the videos are the same person by referring to the purchase history information 41 and the shooting region information 43. Therefore, the tracking of the person can be realized with high accuracy.

Further, the controller 33 calculates a time period during which the person passed through the shooting region of the second camera (monitoring camera "b") based on the time when the person was captured by the first camera (monitoring camera "c"). When two or more person candidates appear in the video made by the second camera in the calculated time period, one of the two or more person candidates is specified as the uncaptured person based on the feature information 44. In this manner, even when two or more person candidates appear in the video, the person determined not to be appearing can be specified from the person candidates with high accuracy.

Furthermore, the controller 33 extracts the features of the person from the video received by the receiving unit 31, generates the feature information 44, and stores the generated feature information 44 in the recognition information storage section 32d. This makes it possible to identify and track the person even if the person is newly extracted.

The first camera (monitoring camera "c") is set at a position where it is possible to capture the person purchasing the product at the POS register 2. As a result, when the person is specified in the video made by the second camera (monitoring camera "b"), the time period during which the person passed through the shooting region of the second camera (monitoring camera "b") can be limited to a time period before a time of an accounting process at the POS register 2.

The monitoring system 100 of the present embodiment includes: the plurality of monitoring cameras 1 installed in the predetermined region where the plurality of products are arranged; the POS register 2 which is installed in the predetermined region and acquires the purchase history information 41 indicating the product purchased by the person; and the monitoring device 3 which has the feature information 44 indicating the features of the person and the shooting region information 43 indicating the shooting regions of the monitoring cameras 1, identifies the person from the videos based on the feature information 44, and specifies the monitoring camera 1 which captured the shooting region through which the person passed based on the purchase history information 41 and the shooting region information 43. If the monitoring system 100 of the present embodiment is used, the object (person) can be tracked with high accuracy, and accordingly, the monitoring system 100 of the present embodiment is useful for flow line visualization and flow line analysis. For example, an entire flow line can be estimated using the videos of the monitoring cameras 1 provided locally. Moreover, the monitoring system 100 is also useful for simulating changes in flow line and for analyzing a value of a shop area.

### (Other embodiments)

The first embodiment has been described above as an example of the technique to be disclosed in the present application. The technique in the present disclosure is not restricted to the first embodiment, but can also be applied to embodiments in which change, replacement, addition, and omission are properly performed. Moreover, it is also possible to make a new embodiment by combining the respective components described in the first embodiment. Therefore, other exemplary embodiments will be described below.

Another example of the time period estimation (S705) and the person extraction (S706) will be described. In the example of FIG. 8, the case where the person "A" can be identified in the videos of the monitoring cameras "a" and "c" installed for capturing the entrance and the POS register 2 (that is, the case where the capturing time information 45 of the monitoring cameras "a" and "c" is present) is taken as an example, and the time period from the OUT time of the person "A" from the monitoring camera "a" on the entrance side to the IN time of the person "A" into the monitoring camera "c" on the POS register 2 side is calculated (estimated). However, the person "A" just needs to be made identifiable at least in the video of the monitoring camera "c" installed for capturing the POS register 2. If the capturing time information 45 of the monitoring camera "c" on the POS register 2 side for the identified person (person "A") is present, or if even one piece of the purchase history information 41 is present in the purchase history information table T1, then the monitoring camera "a" installed at the entrance can be specified as the monitoring camera 1 which should capture the identified person (person "A"), and it can be confirmed whether or not the capturing time information 45 of the monitoring camera "a" is missing. When the capturing time information 45 of the monitoring camera "a" on the entrance side is missing, the person may be extracted from among the videos of the monitoring cameras 1 (monitoring cameras "a", "b") where the capturing time information 45 is missing during the predetermined time period before the IN time of the person into the monitoring camera "c" on the POS register 2 side (for example, within one hour before the IN time) . Moreover, when the plurality of monitoring cameras 1 are installed at places other than the entrance and the POS register 2, the time period thus estimated may be obtained by excluding a time period during which the person was captured by the monitoring camera 1 where the capturing time information 45 is not missing among the plurality of monitoring cameras 1.

The monitoring system 100 of the present disclosure can be composed by cooperation among hardware resources, for example, such as a processor, a memory, and a program.

As described above, the embodiments have been described as illustrative for the technique in the present disclosure. For this purpose, the accompanying drawings and the detailed description have been provided. Accordingly, the components described in the accompanying drawings and the detailed description may include components which are indispensable to solve the problems as well as components which are not indispensable to solve the problems in order to illustrate the technique. For this reason, the non-indispensable components should not be approved to be indispensable immediately based on the description of the non-indispensable components in the accompanying drawings or the detailed description.

Moreover, the embodiments serve to illustrate the technique in the present disclosure. Therefore, various changes, replacements, additions, omissions, and the like can be made within the claims or equivalents thereof.

### Industrial Applicability

The present disclosure is applicable to a monitoring device which tracks an object using a plurality of monitoring cameras and to a monitoring system including the monitoring device.

### Reference Signs List

- 1: monitoring camera
- 2: POS register
- 3: monitoring device
- 11: shooting unit
- 12: transmitting unit
- 21: purchase history information acquiring unit
- 22: transmitting unit
- 31: receiving unit
- 32a: video storage section
- 32b: purchase history information storage section
- 32c: product shelf information storage section
- 32d: recognition information storage section
- 33: controller
- 33a: recognition section
- 33b: recognition information correction section
- 34: display unit
- 100: monitoring system
- T1: purchase history information table
- T2: display information table
- T3: shooting region information table
- T4: feature information table
- T5: capturing time information table

## Claims

1. A monitoring device which identifies a person from videos made by a plurality of cameras (1) installed in a predetermined region where a plurality of products are arranged, the monitoring device comprising:
a receiving unit (31) configured to receive the videos from the plurality of cameras and purchase history information indicating a product purchased by the person from a POS register (2) installed in the predetermined region;
a storage unit configured to store feature information indicating a feature of the person (T4) and shooting region information (T3) indicating shooting regions of the plurality of cameras; and
a controller configured to identify the person from the videos based on the feature information, wherein
the controller (33) specifies, based on the purchase history information (32b) and the shooting region information, the camera which captured the shooting region through which the person passed.

2. The monitoring device according to claim 1, wherein, based on the shooting region information, the controller specifies the camera which captured an image of a location where the product included in the purchase history information was arranged, as the camera which captured the shooting region through which the person passed.

3. The monitoring device according to claim 1, wherein
the plurality of cameras include a first camera and a second camera, the first camera being disposed at a predetermined position, the second camera being specified, by the controller, as the camera which captured the shooting region through which the person passed, and
the person who has been unidentifiable from the video made by the second camera is specified in the video made by the second camera based on a time when the first camera captured the person.

4. The monitoring device according to claim 3, wherein
the controller calculates a time period during which the person passed through the shooting region of the second camera based on a time when the person was captured by the first camera, and,
when two or more person candidates appear in the calculated time period in the video made by the second camera, the controller specifies, based on the feature information, one of the two or more person candidates as the person.

5. The monitoring device according to claim 1, wherein the controller extracts the feature of the person from the videos received by the receiving unit to generate the feature information, and stores the feature information in the storage unit.

6. The monitoring device according to claim 3, wherein the first camera is installed at a position to capture the person purchasing the product at the POS register.

7. A monitoring system comprising:
a plurality of cameras installed in a predetermined region where a plurality of products are arranged;
a POS register which is installed in the predetermined region and acquires purchase history information indicating a product purchased by a person; and
the monitoring device according to any one of claims 1 to 6, which has feature information indicating a feature of the person and shooting region information indicating shooting regions of the plurality of cameras, identifies the person from videos based on the feature information, and specifies the camera which captured the shooting region through which the person passed based on the purchase history information and the shooting region information.

## Patentansprüche

1. Überwachungsvorrichtung, die eine Person in Videos identifiziert, die durch mehrere Kameras (1) aufgenommen wurden, die in einem vorbestimmten Bereich installiert sind, in dem mehrere Produkte angeordnet sind, wobei die Überwachungsvorrichtung umfasst:
eine Empfangseinheit (31), die ausgestaltet ist, von den mehreren Kameras die Videos und von einer POS-Kasse (2), die in dem vorbestimmten Bereich installiert ist, Kaufhistorieninformation zu empfangen, die ein durch die Person gekauftes Produkt angibt,
eine Speichereinheit, die ausgestaltet ist, Merkmalsinformation, die ein Merkmal der Person (T4) angibt, und Aufnahmebereichsinformation (T3) zu speichern, die Aufnahmebereiche der mehreren Kameras angibt, und
eine Steuereinheit, die ausgestaltet ist, die Person in den Videos auf Basis der Merkmalsinformation zu identifizieren, wobei
die Steuereinheit (33) auf Basis der Kaufhistorieninformation (32b) und der Aufnahmebereichsinformation die Kamera spezifiziert, die den Aufnahmebereich aufgenommen hat, den die Person passiert hat.

2. Überwachungsvorrichtung nach Anspruch 1, wobei auf Basis der Aufnahmebereichsinformation die Steuereinheit als die Kamera, die den Aufnahmebereich aufgenommen hat, den die Person passiert hat, die Kamera spezifiziert, die ein Bild eines Ortes aufgenommen hat, an dem das Produkt, das in der Kaufhistorieninformation enthalten ist, angeordnet war.

3. Überwachungsvorrichtung nach Anspruch 1, wobei
die mehreren Kameras eine erste Kamera und eine zweite Kamera umfassen, wobei die erste Kamera an einer vorbestimmten Position angeordnet ist, die zweite Kamera durch die Steuereinheit als die Kamera spezifiziert wird, die den Aufnahmebereich aufgenommen hat, den die Person passiert hat, und
die Person, die in dem Video, das durch die zweite Kamera aufgenommen wurde, nicht identifizierbar gewesen ist, in dem Video, das durch die zweite Kamera aufgenommen wurde, auf Basis einer Zeit spezifiziert wird, zu der die erste Kamera die Person aufgenommen hat.

4. Überwachungsvorrichtung nach Anspruch 3, wobei
die Steuereinheit auf Basis einer Zeit, zu der die Person durch die erste Kamera aufgenommen wurde, eine Zeitperiode berechnet, während der die Person den Aufnahmebereich der zweiten Kamera passiert hat, und
wenn zwei oder mehr Personenkandidaten in der berechneten Zeitperiode in dem Video erscheinen, das von der zweiten Kamera aufgenommen wurde, die Steuereinheit auf Basis der Merkmalsinformation eine aus den zwei oder mehr Personenkandidaten als die Person spezifiziert.

5. Überwachungsvorrichtung nach Anspruch 1, wobei die Steuereinheit das Merkmal der Person aus den Videos, die durch die Empfangseinheit empfangen wurde, extrahiert, um die Merkmalsinformation zu erzeugen und die Merkmalsinformation in der Speichereinheit speichert.

6. Überwachungsvorrichtung nach Anspruch 3, wobei die erste Kamera an einer Position zum Aufnehmen der Person, die das Produkt an der POS-Kasse kauft, installiert ist.

7. Überwachungssystem, mit:
mehreren Kameras, die in einem vorbestimmten Bereich installiert sind, in dem mehrere Produkte angeordnet sind,
einer POS-Kasse, die in dem vorbestimmten Bereich installiert ist und die Kaufhistorieninformation erhält, die ein Produkt angibt, das durch eine Person gekauft wurde, und
der Überwachungsvorrichtung nach einem der Ansprüche 1 bis 6, die Merkmalsinformation, die ein Merkmal der Person angibt, und Aufnahmebereichsinformation besitzt, die Aufnahmebereiche der mehreren Kameras angibt, die Person in Videos auf Basis der Merkmalsinformation identifiziert und auf Basis der Kaufhistorieninformation und der Aufnahmebereichsinformation die Kamera spezifiziert, die den Aufnahmebereich aufgenommen hat, den die Person passiert hat.

## Revendications

1. Dispositif de surveillance qui identifie une personne dans des vidéos faites par une pluralité de caméras (1) qui sont installées dans une zone prédéterminée dans laquelle est disposée une pluralité de produits, ledit dispositif de surveillance comprenant:
une unité de réception (31) configurée pour recevoir les vidéos de la pluralité de caméras ainsi que, à partir d'un terminal point de vente (2) installé dans la zone prédéterminée, de l'information d'historique d'achat indiquant un produit acheté par la personne,
une unité de stockage configurée pour stocker de l'information de caractéristique indiquant une caractéristique de la personne (T4) et de l'information de zone de prise de vue (T3) indiquant des zones de prise de vue de la pluralité de caméras, et
une unité de commande configurée pour identifier la personne dans les vidéos sur la base de l'information de caractéristique, dans lequel
ladite unité de commande (33) spécifie, sur la base de l'information d'historique d'achat (32b) et de l'information de zone de prise de vue, la caméra qui a capturé la zone de prise de vue à travers laquelle la personne est passée.

2. Dispositif de surveillance selon la revendication 1, dans lequel, sur la base de l'information de la zone de prise de vue, l'unité de commande spécifie, comme la caméra qui a capturé la zone de prise de vue à travers laquelle la personne est passée, la caméra qui a capturé une image d'un endroit où le produit inclus dans l'information d'historique d'achat a été disposé.

3. Dispositif de surveillance selon la revendication 1, dans lequel
la pluralité de caméras comprend une première caméra et une deuxième caméra, la première caméra étant disposée sur une position prédéterminée, la deuxième caméra étant spécifiée, par l'unité de commande, comme la caméra qui a capturé la zone de prise de vue à travers laquelle la personne est passée, et
la personne qui n'a pas été identifiable dans la vidéo faite par la deuxième caméra est spécifiée dans la vidéo faite par la deuxième caméra, sur la base d'un temps où la première caméra a capturé la personne.

4. Dispositif de surveillance selon la revendication 3, dans lequel
l'unité de commande calcule une période de temps pendant laquelle la personne a traversé la zone de prise de vue de la deuxième caméra, sur la base d'un temps où la personne a été capturée par la première caméra, et,
lorsque deux candidats personne ou plus apparaissent dans la période de temps calculée dans la vidéo faite par la deuxième caméra, l'unité de commande spécifie, sur la base de l'information de caractéristique, l'un des deux candidats personne ou plus en tant que personne.

5. Dispositif de surveillance selon la revendication 1, dans lequel l'unité de commande extrait la caractéristique de la personne des vidéos reçues par l'unité de réception pour générer l'information de caractéristique, et stocke l'information de caractéristique dans l'unité de stockage.

6. Dispositif de surveillance selon la revendication 3, dans lequel la première caméra est installée sur une position pour capturer la personne achetant le produit sur le terminal point de vente.

7. Système de surveillance comprenant:
une pluralité de caméras installées dans une zone prédéterminée dans laquelle est disposée une pluralité de produits,
un terminal point de vente qui est installé dans la zone prédéterminée et acquiert de l'information d'historique d'achat indiquant un produit acheté par une personne, et
le dispositif de surveillance selon l'une quelconque des revendications 1 à 6, qui présente de l'information de caractéristique indiquant une caractéristique de la personne et de l'information de zone de prise de vue indiquant des zones de prise de vue de la pluralité de caméras, identifie la personne dans des vidéos sur la base de l'information de caractéristique, et spécifie la caméra qui a capturé la zone de prise de vue à travers laquelle la personne est passée sur la base de l'information d'historique d'achat et de l'information de zone de prise de vue.
